# EUROPÄISCHE PATENTANMELDUNG

(11) **EP 4 390 204 A1**
(43) Veröffentlichungstag der Anmeldung: **26.06.2024**
(21) Anmeldenummer: 23218822.7
(22) Anmeldetag: 20.12.2023
(51) Int. Cl.: F16L 23/14, F24F 13/02

(54) **KLIMATISIERUNGSKANAL, PROFIL ZUR BILDUNG EINES PROFILRAHMENS UND VERFAHREN HIERFÜR**

(30) Priorität: 20.12.2022 DE 202022107115 U
(71) Anmelder: Smitka, Günter, 58644 Iserlohn (DE)
(72) Erfinder: Smitka, Günter, 58644 Iserlohn (DE)
(74) Vertreter: Kalkoff & Partner Patentanwälte mbB

(57) **Zusammenfassung**

Die Erfindung betrifft einen Klimatisierungskanal mit einer Kanalwandung und ein Profil zur Bildung eines Profilrahmens eines Klimatisierungskanals sowie ein Verfahren zur Bildung eines Klimatisierungskanals. Um einen Klimatisierungskanal und ein Profil hierfür sowie ein Verfahren zur Bildung eines Klimatisierungskanals vorzusehen, mit dem auf einfache und dauerstabile Weise eine gute Dichtigkeit erreicht wird, wird ein Profilrahmen 16a, 16b aus Profilelementen 20 verwendet, die jeweils einen Flanschbereich 34 und einen Einsteckbereich 36 aufweisen. Der Einsteckbereich 36 weist ein zwischen einem inneren Profilschenkel 44 und einem äußeren Profilschenkel 42 gebildetes offenes Ende 38 und ein Dicht-Ende 48 auf. Der innere Profilschenkel 44 weist einen Dichtabschnitt 30 am Dicht-Ende 48 und einen Einsteck-Abschnitt 34 auf. Das Dicht-Ende 48 weist einen Aufnahmebereich 50 auf, der an dem Dichtabschnitt 30 gebildet ist und in dem ein Teil einer Kanalwandung 14 passend aufgenommen ist. Der innere Profilschenkel 44 weist zwischen dem Dichtabschnitt 30 und dem Einsteck-Abschnitt 34 eine Abkantung 40 auf.

## Beschreibung

Die Erfindung betrifft einen Klimatisierungskanal mit einer Kanalwandung und ein Profil zur Bildung eines Profilrahmens eines Klimatisierungskanals sowie ein Verfahren zur Bildung eines Klimatisierungskanals.

Klimatisierungskanäle bestehen aus aneinandergesetzten, im Querschnitt üblicherweise rechteckigen Kanalteilstücken aus Blech. Zum Verbinden der Kanalteilstücke ist es bekannt, an deren Enden jeweils einen Flanschrahmen vorzusehen. Der Flanschrahmen kann aus Flanschprofilen gebildet sein. Bei bekannten Klimatisierungskanälen wird der Flanschrahmen auf die Enden der Kanalteilstücke aufgeschoben, wobei Abschnitte der Kanalwandung in Einsteckbereichen der Profilelemente aufgenommen sind. Die Flanschrahmen benachbarter Kanalteilstücke werden mittels Schrauben verbunden.

Die DE 20 2017 103 944 U1 offenbart einen Klimatisierungskanal mit einer Kanalwandung und einem Profilrahmen aus Profilelementen. Die Profilelemente weisen jeweils einen Flanschbereich und einen Einsteckbereich auf. Ein Ende eines Abschnitts der Kanalwandung ist in den Einsteckbereich eingesteckt. Der Flanschbereich erstreckt sich mindestens im Wesentlichen rechtwinklig von der Kanalwandung. Der Einsteckbereich ist gebildet zwischen einem äußeren Profilschenkel und einem inneren Profilschenkel.

Entsprechende Vorrichtungen haben sich hinsichtlich der mechanischen Stabilität bewährt. Allerdings wird zur mindestens im Wesentlichen luftdichten Abdichtung der Verbindung oft auf Dichtmittel wie Kunststoffe zurückgegriffen, was sich bezüglich der Handhabung sowie insbesondere hinsichtlich der Langzeit-Haltbarkeit als problematisch erwiesen hat.

Es kann als Aufgabe angesehen werden, einen Klimatisierungskanal und ein Profil hierfür sowie ein Verfahren zur Bildung eines Klimatisierungskanals vorzusehen, mit dem auf einfache und dauerstabile Weise eine gute Dichtigkeit erreicht wird.

Diese Aufgabe wird gelöst durch einen Klimatisierungskanal gemäß Anspruch 1, durch ein Profil gemäß Anspruch 13 und ein Verfahren gemäß Anspruch 14. Abhängige Ansprüche beziehen sich auf vorteilhafte Ausführungsformen der Erfindung.

Der erfindungsgemäße Klimatisierungskanal umfasst mindestens eine Kanalwandung und einen Profilrahmen. Bei der Kanalwandung handelt es sich üblicherweise um ein Blech, das zu einem in der Regel rechteckigen Kanalquerschnitt geformt ist.

Der Profilrahmen umfasst üblicherweise vier rechtwinklig zueinander angeordnete Profilelemente, die zu einem Rahmen verbunden sind, bevorzugt mittels Eckwinkeln. Die Profilelemente weisen jeweils einen Flanschbereich und einen Einsteckbereich auf, die bevorzugt zueinander mindestens im Wesentlichen senkrecht ausgerichtet sind. Zwischen Flanschbereich und Einsteckbereich kann eine Abgrenzung gebildet sein, bspw. durch einen nach Innen vorstehenden Teil des Profils. Die Abgrenzung kann den Flanschbereich bspw. vollständig vom Einsteckbereich trennen, als Abgrenzung ausreichend ist aber jede Einengung im Übergangsbereich zwischen Flanschbereich und Einsteckbereich.

Der Einsteckbereich weist ein zwischen einem inneren Profilschenkel und einem äußeren Profilschenkel gebildetes offenes Ende und ein Dicht-Ende auf. Die Bezeichnungen "innerer" und "äußerer" Profilschenkel beziehen sich dabei bevorzugt auf den Klimatisierungskanal, so dass der innere Profilschenkel bevorzugt innerhalb des Klimatisierungskanals und der äußere außerhalb davon angeordnet ist. Bei der Anbringung des Profilrahmens an der Kanalwandung kann letztere am offenen Ende des Einsteckbereiches eingesteckt werden, bspw. zwischen den inneren und den äußeren Profilschenkel. Die Kanalwandung kann dann mit einer Vorderkante bis zum Dicht-Ende des Einsteckbereichs vorgeschoben werden.

Der innere Profilschenkel weist einen Dichtabschnitt am Dicht-Ende und einen Einsteck-Abschnitt auf, der sich bevorzugt bis zum offenen Ende erstreckt. Am Dichtabschnitt des inneren Profilschenkels ist am Dicht-Ende ein Aufnahmebereich gebildet, in dem die Vorderkante der Kanalwandung passend, bevorzugt klemmend aufgenommen ist. Der Aufnahmebereich ist bevorzugt gebildet zwischen dem Dichtabschnitt und einem parallel dazu angeordneten Profilteil, bspw. einer Abgrenzung, die zwischen Flansch- und Einsteckbereich gebildet ist.

Dabei weist der innere Profilschenkel zwischen dem Dichtabschnitt und dem Einsteck-Abschnitt eine Abkantung auf.

Durch die passende Aufnahme der Kanalwandung im Aufnahmebereich kann - bevorzugt ohne zusätzliche Teile und Elemente, d.h. auch ohne zusätzliche flexible Dichtung oder Dichtmasse - eine Abdichtung zwischen dem Profilrahmen und der Kanalwandung erreicht werden. Die Abkantung hat dabei die Funktion, eine Versteifung zu bewirken, die die Ausbildung von Längswellen verringert oder vollständig vermeidet und so die Dichtwirkung unterstützt.

Durch die spezielle Profilform kann so eine gute Dichtung selbst durch direkten Kontakt zwischen jeweils aus Blech gebildeten Teilen (Kanalwandung und Profilrahmen) erreicht werden.

Gemäß einer bevorzugten Ausführungsform kann der Aufnahmebereich eine Höhe aufweisen, die geringer ist als eine Dicke der Kanalwandung. So kann eine enge Passung und hierdurch gute Dichtung sowie mechanische Festigkeit erreicht werden.

Es kann bevorzugt sein, wenn der äußere Profilschenkel so geformt ist, dass der Dichtabschnitt und der Einsteck-Abschnitt parallel versetzt zueinander angeordnet sind, d.h. so, dass der Einsteck-Abschnitt einen größeren Abstand von der Kanalwandung aufweist als der Dichtabschnitt.

Die Abkantung ist bevorzugt so ausgebildet, dass sie - bspw. direkt angrenzend an den Dichtabschnitt - eine erste Biegekante und im weiteren Verlauf angrenzend an den Einsteck-Abschnitt eine zweite, entgegengesetzte Biegekante aufweist. Die Biegekanten können verschiedenen Biegeradius aufweisen. Bevorzugt kann die erste Biegekante bspw. einen Biegewinkel von weniger als 90° aufweisen, weiter bevorzugt 20 - 70°, besonders bevorzugt 45° +/- 10°. Der Biegewinkel der zweiten Biegekante kann innerhalb derselben Intervalle gewählt werden, bevorzugt mit demselben Betrag wie der erste Biegewinkel.

In bevorzugten Ausführungen kann der Flanschbereich und der Einsteckbereich einstückig gebildet sein durch ein durchgehendes, mehrfach gewinkeltes Blechteil. Die freien Enden des Blechteils können dabei den äußeren und den inneren Profilschenkel des Einsteckbereichs bilden. Der Flanschbereich kann bspw. eine vordere Wandung und eine gegenüberliegende, parallele hintere Wandung aufweisen. Der innere Profilschenkel schließt weiter bevorzugt an die vordere Wandung an und der äußere Profilschenkel an die hintere Wandung.

Bevorzugt ist die Abgrenzung gebildet ist als Abwinkelung, die sich von einer Wandung, bevorzugt von der vorderen Wandung, in Richtung der anderen Wandung erstreckt, bevorzugt der hinteren Wandung des Flanschbereichs. Die Abgrenzung kann insbesondere als Doppel-Abwinkelung ausgebildet sein.

Der Aufnahmebereich kann gebildet sein bspw. durch im Querschnitt zueinander parallel verlaufende Wandstücke. Gemäß einer Weiterbildung der Erfindung kann der Aufnahmebereich allerdings auch eine sich in vom Einsteckbereich wegweisender Richtung verjüngende Form aufweisen. So kann beim Einschieben ein Einklemmen und damit die Abdichtung unterstützt werden.

Die Erfindung bezieht sich auch auf ein zur Bildung eines Flanschrahmens geeignetes Profil. Aus bevorzugt mehreren Teilstücken des Profils kann ein Profilrahmen eines Klimatisierungskanals hergestellt werden. Dabei weist das Profil wie oben bereits erläutert einen Aufnahmebereich am Dicht-Ende auf, der an dem Dichtabschnitt des inneren Profilschenkels gebildet ist und der eine Höhe h zur passenden Aufnahme eines Teils der Kanalwandung aufnimmt. Eine Höhe h von bspw. 0,5 - 1,0 mm, bevorzugt 0,6 - 0,8 mm entspricht der Dicke d eines üblichen Kanalblechs und ermöglicht so die zumindest im Wesentlichen dichtende, bevorzugt klemmende Aufnahme des Kanalblechs im Aufnahmebereich.

Die Erfindung bezieht sich weiter auf ein Verfahren zur Bildung eines Klimatisierungskanals. Dabei wird der oben beschriebene Profilrahmen an einer Kanalwandung so angebracht, dass ein Teil der Kanalwandung passend im Aufnahmebereich aufgenommen ist. Auch hier ist bevorzugt durch die spezielle Profilform bereits eine so gute Dichtung selbst bei direktem Kontakt zwischen jeweils aus Blech gebildeten Teilen (Kanalwandung und Profilrahmen) erreicht, dass auf die sonst übliche Einbringung eines Dichtmittels verzichtet werden kann.

Nachfolgend wird eine Ausführungsform der Erfindung anhand von Zeichnungen näher beschrieben. Dabei zeigen:
- Fig. 1, 2: eine Querschnittsansicht eines Profilelements und einer Kanalwandung separat (Fig. 1) sowie zusammengesteckt (Fig. 2) gemäß einer ersten Ausführungsform;
- Fig. 3: eine perspektivische Darstellung eines Teils des Profilelements und der Kanalwandung auf Fig. 1, 2;
- Fig. 4: ein Teilstück eines Klimatisierungskanals mit einem Profilrahmen;
- Fig. 5: in perspektivischer Darstellung einen Klimatisierungskanal aus zwei Teilstücken
- Fig. 6: in einer Darstellung entsprechend Fig. 1 eine Querschnittsansicht eines Profilelements und einer Kanalwandung gemäß einer zweiten Ausführungsform.

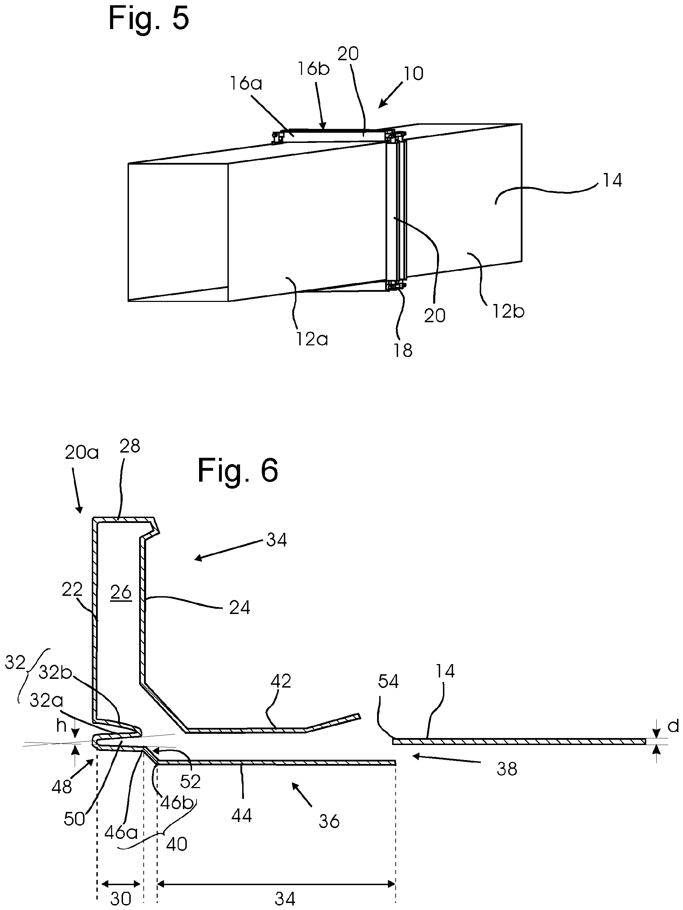

In Fig. 5 ist für eine erste beispielhafte Ausführungsform ein Klimatisierungskanal 10 dargestellt mit einem ersten Kanalteilstück 12a und einem zweiten Kanalteilstück 12b. Jedes Kanalteilstück 12a, 12b umfasst ein rechtwinklig zu einer Kanalwandung 14 gebogenes Blech und einen daran befestigten Flanschrahmen 16a, 16b. Zur Verbindung der Kanalteilstücke 12a, 12b sind die Flanschrahmen 16a, 16b an den Ecken miteinander verschraubt.

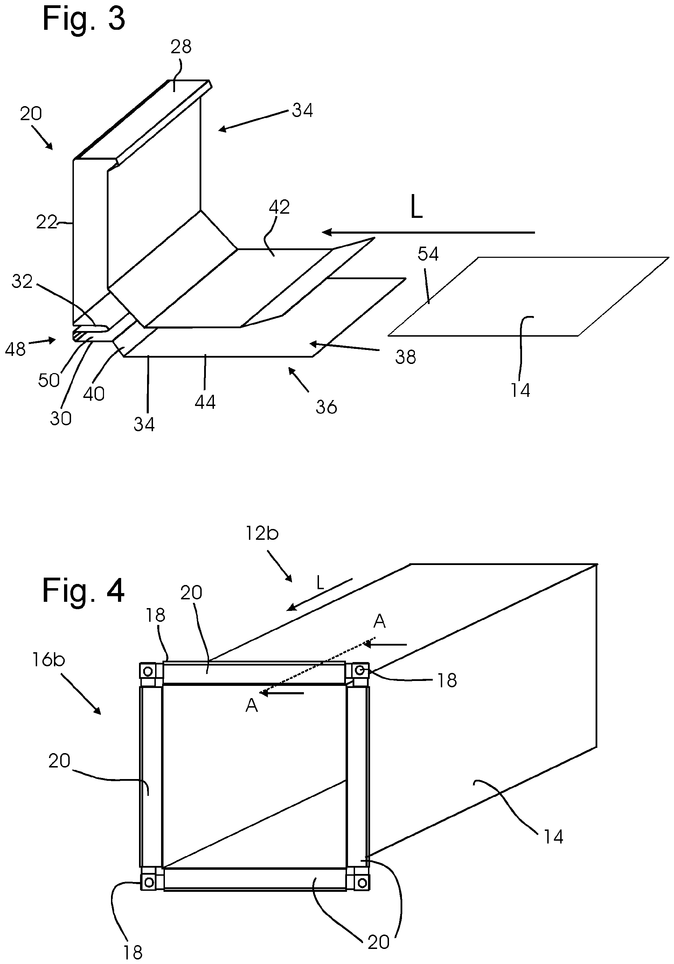

Fig. 4 zeigt das sich in Längsrichtung L erstreckende Kanalteilstück 12b mit dem daran angebrachten Flanschrahmen 16b. Der Flanschrahmen 16b ist gebildet aus vier rechtwinklig zueinander angeordneten Profilelementen 20, die über Eckverbinder 18 zu einem rechteckigen Rahmen 16b verbunden sind. Die Eckverbinder sind als Eckwinkel 18 ausgebildet, die an den Enden der Profilelemente 20 in diese eingeschoben sind. Bzgl. der Art und Anbringung der Eckverbinder 18 wird Bezug genommen auf die DE 10 2005 057 934 A1 des Erfinders.

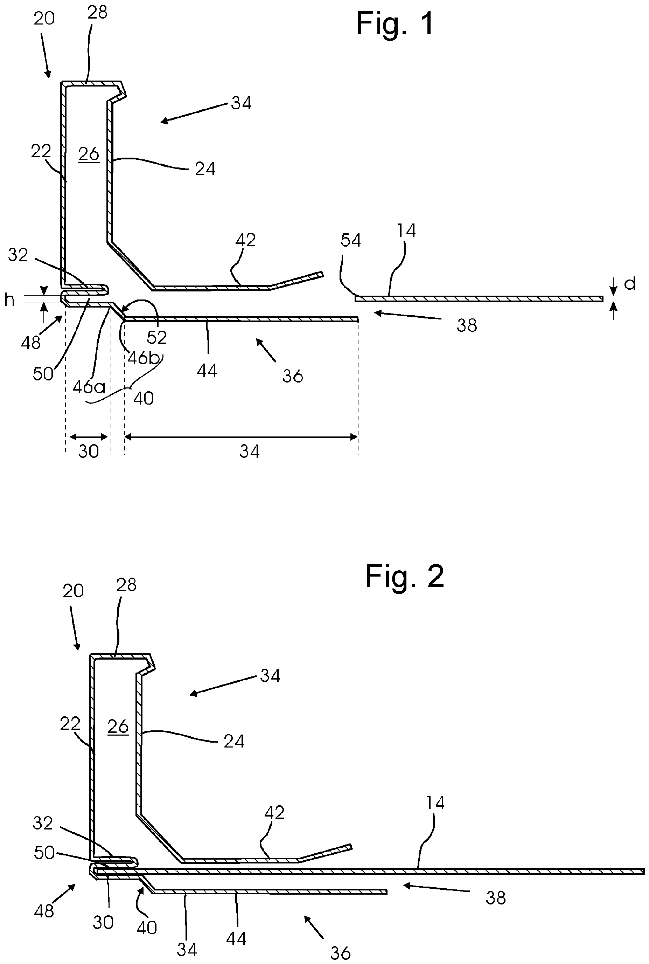

In Fig. 1 - 3 ist eines der Profilelemente 20 des Flanschrahmens 16b im Querschnitt sowie in perspektivischer Darstellung zusammen mit einem Endabschnitt einer Kanalwandung 14 gezeigt. Fig. 1 und 3 zeigen die Elemente separat, Fig. 2 den zusammengebauten Zustand.

Wie ersichtlich ist das Profilelement 20 aus einem zu der gezeigten Profilform mehrfach gewinkelten Blechteil einstückig gebildet, so dass ein Flanschbereich 34 und ein Einsteckbereich 36 geformt sind. Die Profilform umfasst im Flanschbereich 34 eine vordere erste Flanschwandung 22 sowie eine hintere, zweite Flanschwandung 24, die parallel im Abstand zur ersten Flanschwandung 22 verläuft. Zwischen den Flanschwandungen 22, 24 ist ein Flansch-Aufnahmebereich 26 gebildet. Der Flansch-Aufnahmebereich 26 ist nach oben abgeschlossen durch eine Verbindung 28 zwischen der ersten und zweiten Flanschwand 22, 24, wobei zwischen der Verbindung 28 und der zweiten Flanschwandung 24 eine von der ersten Flanschwandung 22 weg gerichtete Abwinkelung vorgesehen ist.

Nach unten hin ist der Flansch-Aufnahmebereich 26 begrenzt durch eine Abgrenzung 32 in Form einer doppelten Abwinkelung an der ersten Flanschwandung 22, die sich in Richtung der zweiten Flanschwandung 24 erstreckt.

Der Einsteckbereich 36 verläuft rechtwinklig zum so gebildeten Flanschbereich 34. Hier ist das Kanalblech 14 in einen Einsteckschlitz 38 einsteckbar. Der Einsteckbereich 36 ist gebildet aus einem äußeren Profilschenkel 42 und einem parallel dazu angeordneten inneren Profilschenkel 44. Der innere Profilschenkel 44 bildet dabei eine Fortsetzung der ersten Flanschwand 22 (mit der dazwischen gebildeten Abgrenzung 32), während der äußere Profilschenkel 42 eine Fortsetzung der zweiten Flanschwandung 24 bildet.

Am Ende des inneren Profilschenkels 42 ist eine Abwinkelung gebildet, die als Einführhilfe bzw. zur Verbreiterung des Einsteckschlitzes 38 dient.

Der Einsteckbereich 36 weist mit dem Einsteckschlitz 38 ein offenes Ende und dem gegenüberliegend ein Dicht-Ende 48 auf. Der innere Profilschenkel 44 umfasst am Dicht-Ende 48 einen Dicht-Abschnitt 30 und anschließend an das offene Ende und den Einsteckschlitz 38 einen Einsteck-Abschnitt 34. Der Einsteck-Abschnitt 34 und der Dicht-Abschnitt 30 des inneren Profilschenkels 44 sind parallel zueinander ausgerichtet und schließen aneinander and über eine dazwischen gebildete Abkantung 40. Die Abkantung 40 umfasst anschließend an den Dicht-Abschnitt 30 eine erste Biegekante 46a mit einem Biegewinkel von ca. 45°, einen Verbindungsabschnitt 52 und eine zweite Biegekante 46b mit einem Biegewinkel von ebenfalls ca. 45°, der dem Biegewinkel der ersten Biegekante 46a entgegengesetzt ist.

Zwischen der Abgrenzung 32 und dem dazu parallelen Dicht-Abschnitt 30 des inneren Profilschenkels 44 ist ein Aufnahmebereich 50 einer geringen, hier konstanten Höhe h gebildet. Der Aufnahmebereich 50 dient wie aus Fig. 2 ersichtlich zur Aufnahme der Kanalwandung 14. Dieses wird mit der Vorderkante 54 durch den Einsteckschlitz 38 in den Einsteckbereich 36 eingeschoben, bis sich der vordere Teil mit der Vorderkante 54 im Aufnahmebereich 50 befindet.

Eine Dicke d des Blechs der Kanalwandung 14 entspricht je nach Ausführung bspw. d=0,6 - 0,8 mm. Die Profilform des Profilelements 20 ist so ausgebildet, dass der Aufnahmebereich 50 in etwa eine Höhe h aufweist, die der Dicke d des Blechs der Kanalwandung 14 entspricht, also ebenfalls h=0,6-0,8mm. Am Dicht-Ende 48 liegen somit das Blech der Kanalwandung 14 und das Blech des Profilelements 20 direkt aufeinander.

Die Kanalwandung 14 wird im Aufnahmebereich 50 so klemmend und dichtend aufgenommen. So kann eine weitgehend luftdichte Verbindung zwischen dem Profilelement 20 und der Kanalwandung 14 ohne separates Dichtelement wie eine Gummi-Dichtung oder eine eingespritzte Dicht-Masse erreicht werden.

Fig. 6 zeigt entsprechend Fig. 1 ein Profilelement 20a gemäß einer zweiten Ausführungsform. Die zweite Ausführungsform entspricht in vielen Details der ersten Ausführungsform; gleiche Teile sind mit gleichen Bezugszeichen bezeichnet. Nachfolgend wird nur auf die Unterschiede eingegangen.

Beim Profilelement 20a gemäß der zweiten Ausführungsform ist der Dichtabschnitt 30 anders geformt als bei der ersten Ausführungsform. Die Abgrenzung 32 ist wie bei der ersten Ausführungsform gebildet aus zwei gefalteten Wandstücken 32a, 32b, von denen das untere Wandstück 32a dem Dichtabschnitt 30 des inneren Profilschenkels 44 gegenüberliegt und so den Aufnahmebereich 50 bildet. Bei der zweiten Ausführungsform sind allerdings der Dichtabschnitt 30 und das untere Wandstück 32a der Abgrenzung 32 nicht parallel zueinander, sondern laufen - gesehen in einer Richtung vom Einsteckbereich 36 in Richtung des Aufnahmebereichs 50 - aufeinander zu, so dass sich eine verjüngende Form des Aufnahmebereiches 50 ausbildet. Die Höhe h des Aufnahmebereichs ist somit variabel, wobei für die Zwecke der Wahl einer geeigneten Höhe h im Vergleich zur Dicke d des Kanalblechs 14 ein in der Mitte des Dichtabschnitts 30 zu messender Wert verwendet wird.

Die verjüngende Form des Aufnahmebereiches 50 gemäß der zweiten Ausführungsform vereinfacht das Einschieben des Kanalblechs 14 und sorgt dabei für eine feste, passende Aufnahme und dichtende Verbindung.

### Bezugszeichenliste

10 Klimatisierungskanal
12a, 12b Kanalteilstücke
14 Kanalwandung
16a, 16b Flansch-Rahmen
18 Eckwinkel
20, 20a Profilelement
22 vordere Flanschwand
24 hintere Flanschwand
26 Flansch-Aufnahmebereich
28 obere Verbindung Flansch
30 Dichtabschnitt
32 Abgrenzung
32a, b Wandstücke der Abgrenzung
34 Einsteck-Abschnitt
36 Einsteckbereich
38 Einsteckschlitz
40 Abkantung
42 äußerer Profilschenkel
44 innerer Profilschenkel
46a, b Biegekanten der Abkantung
48 Dicht-Ende
50 Aufnahmebereich
52 Verbindungsabschnitt der Abkantung
54 Vorderkante des Kanalblechs

## Patentansprüche

1. Klimatisierungskanal, mit
- einer Kanalwandung (14)
- einem Profilrahmen (16a, 16b) aus Profilelementen (20), die jeweils einen Flanschbereich (34) und einen Einsteckbereich (36) aufweisen,
- wobei der Einsteckbereich (36) ein zwischen einem inneren Profilschenkel (44) und einem äußeren Profilschenkel (42) gebildetes offenes Ende (38) und ein Dicht-Ende (48) aufweist,
- wobei der innere Profilschenkel (44) einen Dichtabschnitt (30) am Dicht-Ende (48) und einen Einsteck-Abschnitt (34) aufweist,
- wobei das Dicht-Ende (48) einen Aufnahmebereich (50) aufweist, der an dem Dichtabschnitt (30) gebildet ist und in dem ein Teil der Kanalwandung (14) passend aufgenommen ist,
- und wobei der innere Profilschenkel (44) zwischen dem Dichtabschnitt (30) und dem Einsteck-Abschnitt (34) eine Abkantung (40) aufweist.

2. Klimatisierungskanal nach Anspruch 1, bei dem
- die Kanalwandung (14) im Aufnahmebereich (50) klemmend gehalten ist.

3. Klimatisierungskanal nach Anspruch 1 oder 2, bei dem
- der Aufnahmebereich (50) eine Höhe (h) aufweist, die geringer ist als eine Dicke (d) der Kanalwandung.

4. Klimatisierungskanal nach einem der vorangehenden Ansprüche, bei dem
- die Kanalwandung (14) im Aufnahmebereich (50) dichtend aufgenommen ist.

5. Klimatisierungskanal nach Anspruch 4, bei dem
- die Kanalwandung (14) im Aufnahmebereich (50) direkt ohne Dichtmittel dichtend anliegt.

6. Klimatisierungskanal nach einem der vorangehenden Ansprüche, bei dem
- der Dichtabschnitt (30) und der Einsteck-Abschnitt (34) des äußeren Profilschenkels (44) parallel zueinander angeordnet sind, wobei der Einsteck-Abschnitt (34) einen größeren Abstand von der Kanalwandung (14) aufweist als der Dichtabschnitt (30).

7. Klimatisierungskanal nach einem der vorangehenden Ansprüche, bei dem
- die Abkantung (40) angrenzend an den Dichtabschnitt (30) eine erste Biegekante (46a) mit einem Biegewinkel von weniger als 90° und angrenzend an den Einsteck-Abschnitt (34) eine zweite, entgegengesetzte Biegekante (46b) mit einem Biegewinkel von weniger als 90° aufweist.

8. Klimatisierungskanal nach einem der vorangehenden Ansprüche, bei dem
- der Aufnahmebereich (50) gebildet ist zwischen dem Dichtabschnitt und einer Abgrenzung (32).

9. Klimatisierungskanal nach Anspruch 8, bei dem
- die Abgrenzung (32) gebildet ist als Abwinkelung, die sich von einer Wandung (22) in Richtung der anderen Wandung (24) des Flanschbereichs (34) erstreckt.

10. Klimatisierungskanal nach einem der vorangehenden Ansprüche, bei dem
- der Flanschbereich (34) und der Einsteckbereich (36) einstückig gebildet sind durch ein durchgehendes, mehrfach gewinkeltes Blechteil,
- wobei die freien Enden des Blechteils den äußeren und den inneren Profilschenkel (42, 44) des Einsteckbereichs (36) bilden.

11. Klimatisierungskanal nach Anspruch 10, bei dem
- der Flanschbereich (34) eine vordere Wandung (22) und eine gegenüberliegende, parallele hintere Wandung (24) aufweist,
- wobei der innere Profilschenkel (44), ggfs. nach der Abgrenzung (32), an die vordere Wandung (22) anschließt und der äußere Profilschenkel (42) an die hintere Wandung (24) anschließt.

12. Klimatisierungskanal nach einem der vorangehenden Ansprüche, bei dem
- der Aufnahmebereich (50) eine sich in vom Einsteckbereich (36) wegweisender Richtung verjüngende Form aufweist.

13. Profil zur Bildung eines Profilrahmens (16a, 16b) eines Klimatisierungskanals (10), mit
- einem Flanschbereich (34) und einem Einsteckbereich (36),
- wobei der Einsteckbereich (36) ein zwischen einem inneren Profilschenkel (44) und einem äußeren Profilschenkel (42) gebildetes offenes Ende (38) und ein Dicht-Ende (48) aufweisen,
- wobei der innere Profilschenkel (44) einen Dichtabschnitt (30) am Dicht-Ende (48) und einen Einsteck-Abschnitt (34) aufweist,
- wobei das Dicht-Ende (48) einen Aufnahmebereich (50) aufweist, der an dem Dichtabschnitt (30) zur passenden Aufnahme eines Teils der Kanalwandung (14) gebildet ist.
- und wobei der äußere Profilschenkel (44) zwischen dem Dichtabschnitt (30) und dem Einsteck-Abschnitt (34) eine Abwinkelung (40) aufweist.

14. Verfahren zur Bildung eines Klimatisierungskanals, umfassend
- Bereitstellung eines Profilrahmen (16a, 16b) aus Profilelementen (20), die jeweils einen Flanschbereich (34) und einen Einsteckbereich (36) aufweisen,
- wobei der Einsteckbereich (36) ein zwischen einem inneren Profilschenkel (44) und einem äußeren Profilschenkel (42) gebildetes offenes Ende (38) und ein Dicht-Ende (48) aufweist,
- wobei der innere Profilschenkel (44) einen Dichtabschnitt (30) am Dicht-Ende (48) und einen Einsteck-Abschnitt (34) aufweist,
- wobei das Dicht-Ende (48) einen Aufnahmebereich (50) aufweist, der an dem Dichtabschnitt (30) gebildet ist
- und wobei der innere Profilschenkel (44) zwischen dem Dichtabschnitt (30) und dem Einsteck-Abschnitt (34) eine Abkantung (40) aufweist, und
- Anbringung des Profilrahmens (16a, 16b) an einer Kanalwandung (14) so, dass ein Teil der Kanalwandung (14) passend im Aufnahmebereich (50) aufgenommen ist.

15. Verfahren nach Anspruch 15, bei dem
- die Kanalwandung (14) ohne Einbringung eines Dichtmittels in den Aufnahmebereich (50) eingesteckt wird.
